(19) Europäisches Patentamt
European Patent Office
Office européen des brevets

(11) Veröffentlichungsnummer : **0 284 560 B1**

(12) **EUROPÄISCHE PATENTSCHRIFT**

(45) Veröffentlichungstag der Patentschrift : **04.03.92 Patentblatt 92/10**

(51) Int. Cl.$^5$ : **C09B 23/14,** C09B 56/08, D06P 1/16

(21) Anmeldenummer : **88810156.5**

(22) Anmeldetag : **14.03.88**

# (54) Dispersionsfarbstoffe, enthaltend eine Tricyanovinylgruppierung.

(30) Priorität : **19.03.87 CH 1050/87**
**29.12.87 CH 5091/87**

(43) Veröffentlichungstag der Anmeldung : **28.09.88 Patentblatt 88/39**

(45) Bekanntmachung des Hinweises auf die Patenterteilung : **04.03.92 Patentblatt 92/10**

(84) Benannte Vertragsstaaten : **BE CH DE FR GB IT LI**

(56) Entgegenhaltungen :
**BE-A- 835 291**
**FR-A- 2 224 520**
**GB-A- 1 058 662**

(56) Entgegenhaltungen :
**GB-A- 1 110 714**
**US-A- 2 889 335**
**CHEMICAL ABSTRACTS, Band 101, Nr. 24, Dezember 1984, Seite 68, Zusammenfassung Nr. 212671y, Columbus, Ohio, US; & JP-A-59 129 264 (SUMITOMO CHEMICAL CO., LTD) 25-07-1984**

(73) Patentinhaber : **CIBA-GEIGY AG**
**Klybeckstrasse 141**
**CH-4002 Basel (CH)**

(72) Erfinder : **Liechti, Peter, Dr.**
**Alte Olsbergerstrasse 17**
**CH-4422 Arisdorf (CH)**
Erfinder : **Della Casa, Angelo**
**Gerstenweg 66**
**CH-4125 Riehen (CH)**

**EP 0 284 560 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf Dispersionsfarbstoffe, Verfahren zu deren Herstellung sowie deren Verwendung zum Färben von synthetischem organischem Material.

Die erfindungsgemässen Farbstoffe entsprechen der Formel

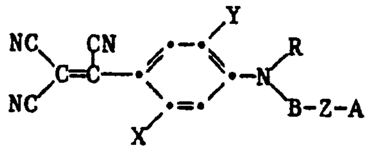 (1)

worin

X Wasserstoff, $C_1$-$C_4$-Alkyl, $C_1$-$C_4$-Alkoxy oder Halogen,
Y Wasserstoff, Halogen, $C_1$-$C_4$-Alkyl, $C_1$-$C_4$-Alkoxy, $C_1$-$C_4$-Alkoxy-$C_1$-$C_4$-alkyl oder $C_1$-$C_4$-Alkoxy-$C_1$-$C_4$-alkoxy,
R Wasserstoff, $C_1$-$C_{12}$-Alkyl, $C_2$-$C_{12}$-Alkenyl oder Phenyl bedeutet, oder Y und R, zusammen mit dem Stickstoffatom und den beiden sie verbindenden C-Atomen, einen 5- oder 6-Ring bilden,
B einen geradkettigen oder verzweigten $C_2$-$C_6$-Alkylenrest,
Z ein Brückenglied der Formel -O-, -S-, -NH-,

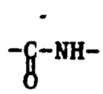, 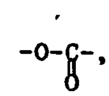, 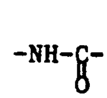

oder eine direkte Bindung und
A einen Rest der Formel

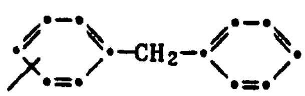 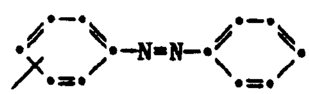

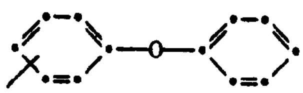 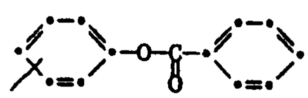

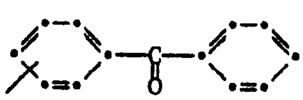 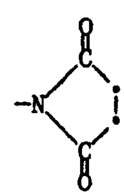 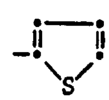

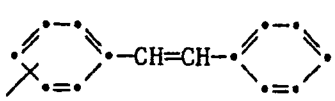 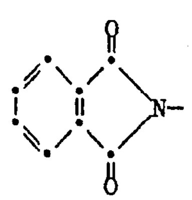 oder 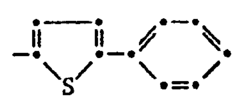

bedeutet, wobei diese Reste noch durch $C_1$-$C_4$-Alkyl, $C_1$-$C_4$-Alkoxy, Halogen oder Nitro substituiert sein können.

Unter Alkylgruppen sind in dieser Anmeldung generell geradkettige, verzweigte oder cyclische Alkylgruppen zu verstehen. Es handelt sich z.B. um Methyl, Ethyl, Propyl, i-Propyl, Butyl, i-Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert. Octyl, 2-Ethylhexyl, n-Nonyl, Isononyl, Decyl, Dodecyl, Cyclopentyl, Cyclohexyl, Methylcyclohexyl sowie die dazugehörenden Isomeren.

Diese Alkylreste können substituiert sein, z.B. durch Hydroxy, Alkoxy, mit 1 bis 4 Kohlenstoffatomen, insbesondere Methoxy, Cyano oder Phenyl. Als weitere Substituenten sind geeignet Halogen, wie Fluor, Chlor oder Brom, oder -CO-U, worin U Alkyl mit 1 bis 6 Kohlenstoffatomen oder Phenyl ist.

Als Alkenylreste kommen solche Reste in Betracht, welche sich von den oben aufgeführten Alkylresten durch Ersatz mindestens einer Einfachbindung durch eine Doppelbindung ableiten. Geeignete Reste sind z.B. Ethenyl oder Propenyl.

Geeignete Alkoxyreste sind z.B. Methoxy, Ethoxy, Propoxy, iso-Propoxy, n-Butoxy, i-Butoxy oder tert.-Butoxy.

Beispiele für geeignete substituierte Alkylreste sind: Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypentyl, Methoxybutyl, Ethoxypentyl, 2-Hydroxyethoxypentyl, Cyanethyl, Hydroxyethyl.

Auch die Alkylenreste B können geradkettig oder verzweigt oder auch substituiert sein. Es kommen z.B. Ethylen, 1,3-Propylen, 1,2-Propylen, 1,2-Butylen, 1,6-Hexylen, 2-Hydroxy-1,3-propylen oder 2-Chlor-1,3-propylen in Frage.

Unter Phenylresten sind in dieser Anmeldung generell unsubstituierte oder substituierte Phenylreste zu verstehen. Als Substituenten kommen z.B. $C_1$-$C_4$-Alkyl, $C_1$-$C_4$-Alkoxy, Brom, Chlor, Nitro oder $C_1$-$C_4$-Alkylcarbonylamino in Betracht.

Halogen bedeutet in dieser Anmeldung generell Fluor, Brom oder vor allem Chlor.

Z bedeutet eine direkte Bindung oder ein Brückenglied aus der Reihe

$$-\underset{\underset{O}{\|}}{C}-NH-,\quad -O-\underset{\underset{O}{\|}}{C}-\ \text{oder}\ -NH-\underset{\underset{O}{\|}}{C}-,\ \text{wobei}\ -O-\ \text{und}\ -O-\underset{\underset{O}{\|}}{C}-$$

bevorzugt sind, falls die Bindung zum Rest A über ein Kohlenstoffatom dieses Restes erfolgt. Falls der Rest A ein Heteroatom aufweist, über welches die Bindung mit dem restlichen Farbstoffmolekül der Formel (1) erfolgt, so stellt Z vorzugsweise eine direkte Bindung dar.

Bevorzugte Reste A sind die Reste der Formeln

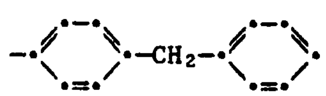
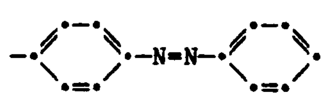

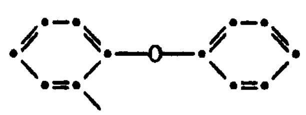
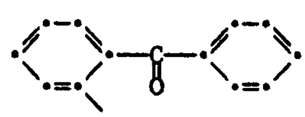
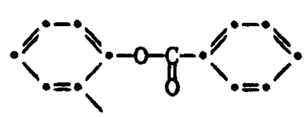

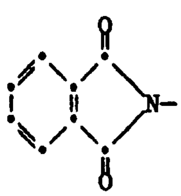
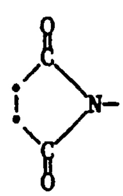
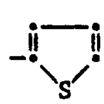

Diese Reste können noch die bei Dispersionsfarbstoffen üblichen Substituenten tragen, z.B. $C_1$-$C_4$-Alkyl, $C_1$-$C_4$-Alkoxy, Halogen oder Nitro.

Die bevorzugten Bedeutungen von X sind Wasserstoff, Methyl, Methoxy, Chlor oder Brom, wobei Wasserstoff und Methyl besonders bevorzugt sind. Y bedeutet vorzugsweise Chlor, Methyl, Methoxy, Methoxyethyl oder Methoxyethoxy oder vor allem Wasserstoff.

Die bevorzugte Bedeutung von R ist $C_1$-$C_4$-Alkyl, welches gegebenenfalls substituiert ist durch Hydroxy, $C_1$-$C_4$-Alkoxy oder Phenyl. In besonders bevorzugten Verbindungen der Formel (1) ist R Methyl, Ethyl oder Benzyl.

R und Y können zusammen mit dem Stickstoffatom und den beiden sie verbindenden C-Atomen einen 5- oder 6-gliedrigen Ring bilden, welcher gegebenenfalls ein Sauerstoffatom als weiteres Heteroatom enthalten kann. Geeignete Substituenten für diese Ringe sind z.B. Hydroxy, Methyl, Methoxy, Chlor oder Phenyl. Vorzugsweise bilden R und Y zusammen mit dem Stickstoffatom und den beiden sie verbindenden C-Atomen einen

6-Ring, welcher unsubstituiert ist oder 1 bis 3 Methylgruppen trägt.

B stellt vorzugsweise einen geradkettigen oder verzweigten Alkylenrest mit 2 bis 4 Kohlenstoffatomen dar, welcher gegebenenfalls durch Hydroxy substituiert ist. Insbesondere bevorzugt sind die Dispersionsfarbstoffe der Formel (1), bei denen B Ethylen oder 1,3-Propylen ist.

Wegen ihrer guten färberischen Eigenschaften sind vor allen Dingen die Farbstoffe der Formel

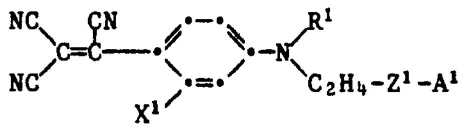 (2)

von Interesse, worin

$X^1$ Wasserstoff oder Methyl

$R^1$ Methyl, Ethyl oder Benzyl

$Z^1$ die direkte Bindung, -O-, -S- oder

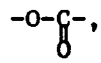,

$A^1$ ein Rest der Formel

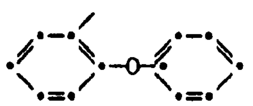

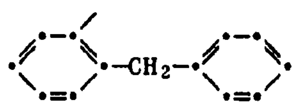

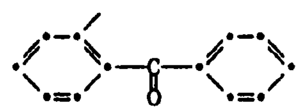

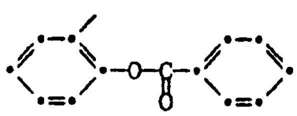

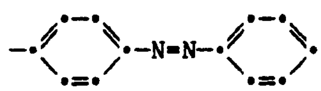

oder

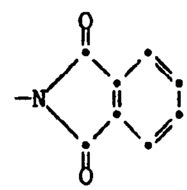

ist.

Die Verbindungen der Formel (1) werden auf an sich bekannte Art und Weise hergestellt, beispielsweise indem man eine Verbindung der Formel

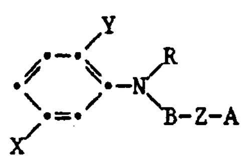 (3)

mit Tetracyanethylen umsetzt, oder indem man eine Verbindung der Formel

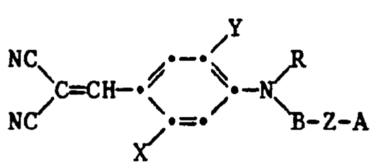 (4)

mit einem Cyanid und anschliessend mit einem Oxidationsmittel umsetzt.

Die Verbindungen der Formeln (3) und (4) sind bekannt oder können auf an sich bekannte Art und Weise erhalten werden.

Die Verbindungen der Formel (3) können z.B. erhalten werden durch Umsetzung einer Verbindung der Formel

Hal - B - Z - A (5)

mit einem Anilinderivat der Formel

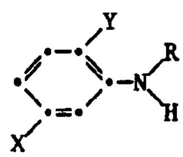

(6)

wobei man die Verbindungen der Formel (5) z.B. durch Umsetzung einer Verbindung der Formel

H - Z - A (7)

mit einer Verbindung der Formel

Hal - B - Hal (8)

erhält.

Verbindungen der Formel (3), worin Z ein Brückenglied der Formel

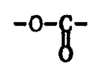

darstellt, werden z.B. hergestellt, indem man auf an sich bekannte Art eine Verbindung der Formel

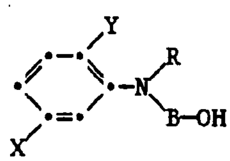

(9)

mit einer Verbindung der Formel

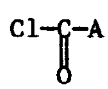

(10)

umsetzt.

Die Verbindungen der Formeln (9) und (10) sind bekannt.

Bei den Formeln (3) bis (10) weisen A, Z, B, X, Y und R die unter der Formel (1) angegebene Bedeutung auf und Hal bedeutet Chlor oder Brom, wobei die beiden Halogenatome gleich oder verschieden sein können.

Die Verbindungen der Formel (7) und (8) sind bekannt oder lassen sich auf bekannte Art und Weise herstellen.

Bei der Umsetzung der Verbindung (7) mit der Verbindung (8) arbeitet man vorzugsweise in einem inerten organischen Lösungsmittel und in Gegenwart einer Base. Als inerte organische Lösungsmittel kommen z.B. Verbindungen mit einem Siedepunkt oberhalb 100°C in Frage, wie Alkohole, Ether, Ester, Nitrobenzol, Halogenbenzol, Toluol, Xylole etc. Vor allem geeignet sind höher siedende Alkohole, wie tert.-Butanol, sowie Ether von mehrwertigen Alkoholen, z.B. Diethylenglykolmonoethylether oder -monomethylether sowie die enstprechenden Diether.

Die Komponenten (7) und (8) können in stöchiometrischem Verhältnis eingesetzt werden, ein Ueberschuss an einer der Komponenten, vorzugsweise der Verbindung (8), erweist sich jedoch oft als günstiger.

Die Reaktionstemperatur liegt etwa zwischen 80 und 150°C, vorzugsweise zwischen 100 und 130°C und die Reaktionsdauer beträgt, je nach Temperatur und Reaktionspartnern etwa 1 bis 20 Stunden. Nach Beendigung der Umsetzung wird die evtl. im Ueberschuss eingesetzte Komponente (8) entfernt und anschliessend die erhaltene Verbindung der Formel (5) mit einem Anilinderivat der Formel (6) umgesetzt.
Auch diese Umsetzung wird vorzugsweise in einem der obengenannten Lösungsmittel durchgeführt. Die Temperatur liegt normalerweise oberhalb 100°C, insbesondere zwischen 120 und 200°C und vor allem zwischen 140 und 180°C.

Die Komponenten (5) und (6) können in stöchiometrischem Verhältnis eingesetzt werden, normalerweise setzt man jedoch die leichter zugängliche Komponente, meist das Anilinderivat (6), im Ueberschuss ein, z.B. in 10%-igem Ueberschuss.
Nach Beendigung der Reaktion wird auf übliche Weise aufgearbeitet, z.B. indem man den Ueberschuss an der Komponente (6) und das Lösungsmittel entfernt und den Rückstand gegebenenfalls reinigt, z.B. durch Umkristallisation.
Sowohl bei der Umsetzung der Verbindungen (7) und (8) als auch bei der Umsetzung der Verbindungen (5) und (6) arbeitet man in Gegenwart einer Base, wobei sowohl organische als auch anorganische Basen geeignet sind, z.B. Pyridin, Piperidin, Triethylamin, Natrium- oder Kaliumcarbonat oder -hydrogencarbonat. Diese Base wird im allgemeinen in geringem Ueberschuss, z.B. in 10%-igem Ueberschuss, eingesetzt.
Die gesamte Herstellung der Verbindung (3) lässt sich auch als sogenannte Eintopfreaktion durchführen, indem man für die beiden Reaktionsschritte das gleiche Lösungsmittel einsetzt und die Verbindung (5) nicht isoliert.

Die Verbindungen der Formel (4) werden z.B. erhalten, indem man eine Verbindung der Formel (3) zunächst unter den bekannten Bedingungen der Vilsmeier-Synthese mit z.B. $POCl_3$ und Dimethylformamid oder Phosgen und Dimethylformamid umsetzt und danach mit Malodinitril zur Reaktion bringt.

Die Umsetzung der Verbindungen der Formel (3) mit Tetracyanethylen erfolgt auf an sich bekannte Art und Weise, vorzugsweise in einem inerten Lösungsmittel bei einer Temperatur zwischen etwa 20 und 100°C, wobei die Reaktionskomponenten in etwa äquivalenten Mengen eingesetzt werden.

Auch die Umsetzung der Verbindungen der Formel (4) mit einem Cyanid und anschliessend mit einem Oxidationsmittel erfolgt auf an sich bekannte Art und Weise. Vorzugsweise führt man die Reaktion als Eintopfreaktion, d.h. ohne Isolierung der Zwischenstufe, und ebenfalls in einem inerten Lösungsmittel durch. Als Cyanid setzt man vor allem Kalium- oder Natriumcyanid ein und als Oxidationsmittel insbesondere Brom.

Die Umsetzung mit dem Cyanid erfolgt bevorzugt bei etwa 20 bis 100°C und die Umsetzung mit dem Oxidationsmittel bei etwa 0 bis 20°C.

Als inertes Lösungsmittel für die vorstehenden Reaktionen kommen z.B. Halogenverbindungen wie Chloroform oder Chlorbenzol, Ether, aromatische Verbindungen, wie Benzol, Toluol oder Xylol, insbesondere jedoch Tetrahydrofuran oder Dimethylformamid in Frage.

Die Isolierung der Farbstoffe der Formel (1) erfolgt z.B. indem man die Reaktionslösungen in Eiswasser giesst, den ausgeschiedenen Farbstoff abfiltriert, eventuell wäscht und trocknet.

Die erfindungsgemässen Verbindungen der Formel (1) können als Farbstoffe zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose 2 1/2-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus $\alpha,\alpha$-Dimethyl-4,4′-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140°C. Cellulose-2 1/2-acetat färbt man vorzugsweise zwischen ungefähr 65 bis 85°C und Cellulosetriacetat bei Temperaturen bis zu 115°C.

Die neuen Farbstoffe färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffe eignen sich aber insbesonders zum Färben nach dem Thermosol-Verfahren.

Das genannte Textilmaterial kann dabei in den verschiedensten Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat überzuführen. Hierzu wird der Farbstoff vermahlen, so dass seine Teilchengrösse in Mittel zwischen 0,01 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so ehaltenen Präparaten kann man nach Zugabe von Wasser färben und bedrucken.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffe verleihen den genannten Materialien, vor allem dem Polyestermaterial, egale orangefarbene oder rote Farbtöne von sehr guten Gebrauchs-Echtheiten, wie vor allem guter Lichtechtheit, Thermofixier-, Plissier-, Chlor- und Nassechtheit wie Wasser-, Schweiss- und Waschechtheit; die Ausfärbungen sind ferner gekennziechnet durch eine gute pH-Stabilität und sehr gute Reibechtheit. Es werden ausserdem sehr farbstarke Färbungen erzielt. Besonders hervorzuheben ist die gute Thermomigrierechtheit der erhaltenen Färbungen.

Die erfindungsgemässen Farbstoffe können auch gut verwendet werden zur Herstellung von Mischnuancen zusammen mit anderen Farbstoffen. Selbstverständlich können auch Mischungen der erfindungsgemässen Farbstoffe untereinander verwendet werden.

Die vorstehend genannte Verwendung der erfindungsgemässen Azoverbindungen der Formel (1) stellt ebenso einen Gegenstand der vorliegenden Erfindung dar wie ein Verfahren zum Färben oder Bedrucken von halb-synthetischem oder synthetischem hydrophobem Fasermaterial, insbesondere Textilmaterial, das darin besteht, eine oder mehrere Verbindungen der Formel (1) auf das genannte Material aufzubringen oder es diesem einzuverleiben. Das genannte hydrophobe Fasermaterial ist vorzugsweise textiles Polyestermaterial. Weitere Substrate, die durch das erfindungsgemässe Verfahren behandelt werden können sowie bevorzugte Verfahrensbedingungen sind vorstehend bei der näheren Erläuterung der Verwendung der erfindungsgemässen Verbindungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

In der JP-A-59-129264 sind bereits Tricyanostyrylfarbstoffe beschrieben, welche jedoch nicht den Rest A der erfindungsgemässen Farbstoffe enthalten.

Die folgenden Beispiele veranschaulichen die Erfindung weiter, ohne sie darauf zu beschränken. Teile und Prozente beziehen sich, sofern nicht anders angegeben, auf das Gewicht.

Beispiel 1:

Zu einer Lösung von 17,2 g der Verbindung der Formel

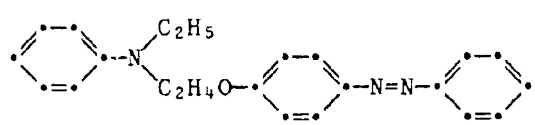

in 60 ml Dimethylformamid gibt man innerhalb von ca. 7 Minuten portionenweise 7,5 g Tetracyanethylen. Die Lösung färbt sich sofort rot und erwärmt sich auf ca. 36°. Man heizt auf 55-60° auf. Nach ca. 10 Minuten lässt sich im Dünnschichtchromatogramm kein Ausgangsmaterial mehr nachweisen. Nach dem Abkühlen auf Raumtemperatur trägt man das Reaktionsgemish auf 500 ml Eiswasser aus und nutscht den klebrigen Farbstoff ab, wäscht mit Wasser, dann zur Entfernung überschüssigen Tetracyanethylens mit 20-prozentiger Natriumsulfitlösung und schliesslich wieder mit Wasser. Nach dem Trocknen im Vakuum bei 80° erhält 20,7 g (92,8 % der Theorie) des Farbstoffes der Formel

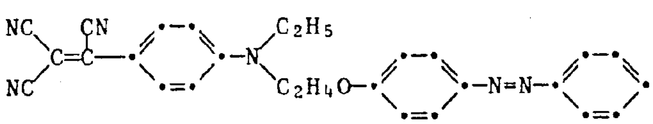

als braunrotes Pulver vom Schmelzpunkt 158-159°. Ein chromatographisch gereinigtes Präparat schmilzt auch bei 158-159° und zeigt folgende Spektraldaten: $\lambda_{max}$ 512 nm/ $\varepsilon_{max}$ 43 800.

Die Ausgangsverbindung wird folgendermassen hergestellt:

19,8 g 4-Hydroxyazobenzol werden in 100 ml Diethylenglykolmonoethylether gelöst und mit 12,8 g Soda und 52,5 ml 1,2-Dibromethan versetzt. Man erwärmt auf ca. 116°C und rührt 2 Stunden bei dieser Temperatur. Dann entfernt man das überschüssige Dibromethan durch Wasserdampfdestillation und anschliessend durch Destillation bei ca. 110°C im Vakuum das Wasser. Man erhält eine Suspension, enthaltend ca. 26 g eines orangeroten Pulvers der Formel

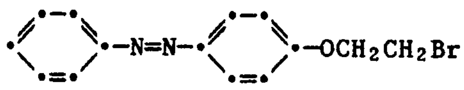

Zu dieser Suspension gibt man 10,8 g Soda und 11,3 ml N-Ethylanilin, erwärmt auf 120 bis 125°C und rührt 12 Stunden bei dieser Temperatur. Dann wird der Ueberschuss an N-Ethylanilin durch Wasserdampfdestillation entfernt. Das Reaktionsgemisch wird auf Raumtemperatur abgekühlt, wobei sich ein hellbraunes, zähflüssiges Oel abscheidet. Das Wasser wird abdekantiert, das Oel in Aceton gelöst und der geringe unlösliche Rückstand abfiltriert. Dann wird das Filtrat mit Eis und Wasser versetzt, der sich abscheidende Niederschlag abgesaugt und mit Wasser gewaschen. Man erhält ca. 23 g eines goldgelben Pulvers der Formel

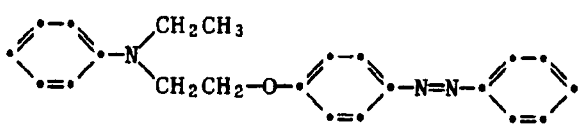

mit einem Schmelzpunkt von 80-82°C.

Beispiele 2-13

In analoger Weise wie im Beispiel 1 beschrieben erhält man aus den entsprechenden Zwischenprodukten die folgenden Farbstoffe:

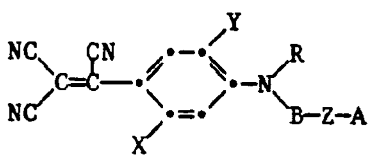

| Bsp. No. | Y | X | R | B | Z | A | Nuance auf Polyester | Smp. |
|---|---|---|---|---|---|---|---|---|
| 2 | H | H | $C_2H_5$ | $C_2H_4$ | direkte Bindung | 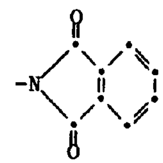 | rot | 255-257° |
| 3 | H | H | $C_2H_5$ | $C_2H_4$ | O | 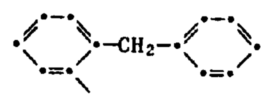 | rot | 107-108° |
| 4 | H | H | Benzyl | $C_2H_4$ | O | 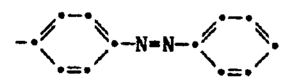 | rot | 94- 96° |
| 5 | H | $CH_3$ | $C_2H_5$ | $C_2H_4$ | O | 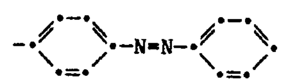 | rubin | 68- 70° |
| 6 | H | H | $C_2H_5$ | $(CH_2)_3$ | O | 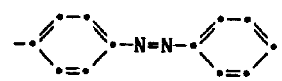 | rot | 135-137° |
| 7 | H | H | $C_2H_5$ | $(CH_2)_5$ | O | 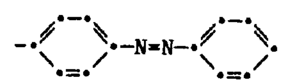 | rot | 118-120° |
| 8 | H | H | $C_2H_5$ | $C_2H_4$ | 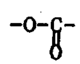 | 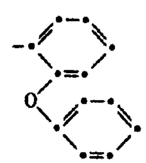 | rot | 95- 96° |

| Bsp. No. | Y | X | R | B | Z | A | Nuance auf Polyester | Smp. |
|---|---|---|---|---|---|---|---|---|
| 9 | H | H | $C_2H_5$ | $C_2H_4$ | 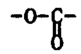 | 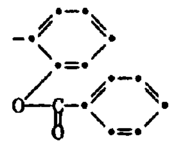 | rot | |
| 10 | H | H | $C_2H_5$ | $C_2H_4$ | 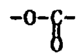 | 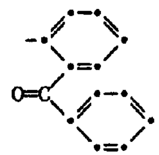 | rot | 87- 88° |
| 11 | H | H | $C_2H_5$ | $C_2H_4$ | 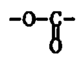 | 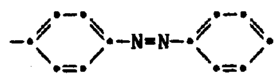 | rot | |
| 12 | H | H | $C_2H_5$ | $C_2H_4$ | 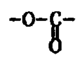 | 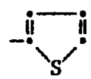 | rot | 136-137° |
| 13 | H | $CH_3$ | $C_2H_5$ | $C_2H_4$ | direkte Bindung | 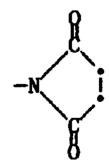 | rubin | 157-158° |

Beispiel 14:

Man mischt 1 Teil des trockenen, coupagefreien Farbstoffs gemäss Beispiel 1 in einer Sandmühle zusammen mit 2 Teilen Dinaphthylmethandisulfonat (Na-Salz), 34 Teilen Quarzsand und 17 Teilen Wasser und mahlt das Gemisch so lange, bis eine Korngrösse von etwa 2 µ oder kleiner erreicht ist. Die entstehende Suspension wird vom Sand getrennt stellt dann eine stabile Flüssigformulierung dar. Sie kann aber auch der Sprühtrocknung unterworfen werden, wobei ein pulverförmiges Färbepräparat erhalten wird.

Auf die gleiche Weise kann man auch stabile flüssige, und bei genügend hohem Schmelzpunkt der Farbstoffe auch feste Präparate der Farbstoffe der Beispiele 2-13 herstellen.

Beispiel 15:

Polyethylenglykolterephthalatgewebe wird auf einem Foulard bei 40° mit einer Flotte folgender Zusammensetzung imprägniert:

20 Teile des gemäss Beispiel 14 erhaltenen Farbstoffpräparates fein dispergiert in
10 Teilen Natriumalginat,
20 Teilen Octylphenolpolyglykoläther und
930 Teilen Wasser.

Das auf ca. 60 % abgequetschte Gewebe wird bei 100° getrocknet und anschliessend während 60 Sekunden bei einer Temperatur von 210° fixiert. Die gefärbte Ware wird mit Wasser gespült, geseift oder reduktiv gereinigt und getrocknet. Man erhält eine brillante, lichtechte rote Färbung, welche sich vor allem durch eine gute Thermomigrationsechtheit auszeichnet.

Beispiel 16:

2 Teile des gemäss Beispiel 14 erhaltenen Farbstoffpräparates werden in 4000 Teilen Wasser, enthaltend 12 Teile des Natriumsalzes von o-Phenylphenol, 2 Teile Ammoniumsulfat sowie 2 Teile des Natriumsalzes der Dinaphthylmethandisulfonsäure, dispergiert. Dann färbt man 100 Teile Garn aus Polyethylenglykolterephthalat 90 Minuten lang bei 95 bis 98° in dieser Flotte.

Die Färbung wird anschliessend gespült und mit wässriger Natronlauge und einem Dispergator nachbehandelt. Man erhält so eine licht- und sublimierechte rote Färbung.

Beispiel 17:

1 Teil des gemäss Beispiel 5 erhaltenen Farbstoffs wird mit 2 Teilen einer 50%igen wässerigen Lösung des Natriumsalzes der Dinaphthylmethandisulfonsäure nass vermahlen und getrocknet.

Dieses Farbstoffpräparat wird mit 40 Teilen einer 10%igen wässerigen Lösung des Natriumsalzes der N-Benzylheptadecyl-benzimidazoldisulfonsäure verrührt und 4 Teile einer 40%igen Essigsäurelösung zugegeben. Durch Verdünnen mit Wasser wird daraus ein Färbebad von 4000 Teilen bereitet.

In dieses Bad geht man bei 50° mit 100 Teilen eines Polyesterfaserstoffes ein, steigert die Temperatur innert einer halben Stunde auf 120 bis 130° und färbt eine Stunde in geschlossenem Gefäss bei dieser Temperatur. Anschliessend wird gut gespült. Man erhält eine rubinrote Färbung mit guten Echtheiten, insbesondere guter Sublimations- und Thermomigrationsechtheit.

## Patentansprüche

1. Dispersionsfarbstoffe der Formel

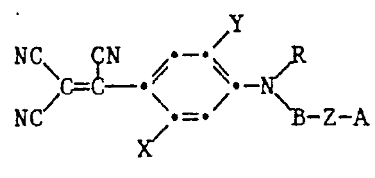

(1)

worin

X Wasserstoff, $C_1$-$C_4$-Alkyl, $C_1$-$C_4$-Alkoxy oder Halogen,

Y Wasserstoff, Halogen, $C_1$-$C_4$-Alkyl, $C_1$-$C_4$-Alkoxy, $C_1$-$C_4$-Alkoxy-$C_1$-$C_4$-alkyl oder $C_1$-$C_4$-Alkoxy-$C_1$-$C_4$-alkoxy, R Wasserstoff, $C_1$-$C_{12}$-Alkyl, $C_2$-$C_{12}$-Alkenyl oder Phenyl bedeutet, oder

Y und R, zusammen mit dem Stickstoffatom und den beiden sie verbindenden C-Atomen, einen 5- oder 6-Ring bilden, und

B einen geradkettigen oder verzweigten $C_2$-$C_6$-Alkylenrest,

Z ein Brückenglied der Formel -O-, -S-, -NH-,

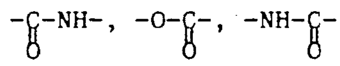

oder eine direkte Bindung und

A einen Rest der Formel

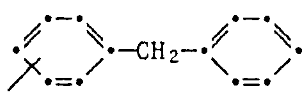

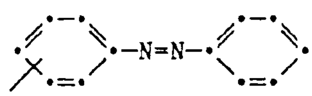

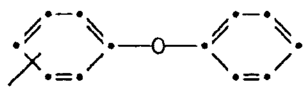

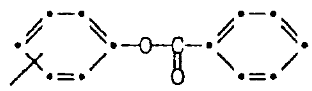

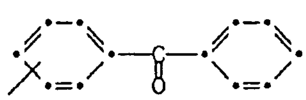

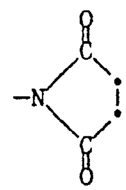

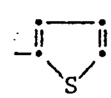

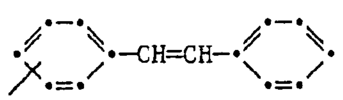

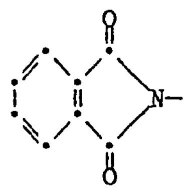

oder

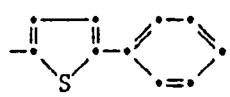

bedeutet, wobei diese Reste noch durch $C_1$-$C_4$-Alkyl, $C_1$-$C_4$-Alkoxy, Halogen oder Nitro substituiert sein können.

2. Farbstoffe gemäs Anspruch 1, worin X Waserstoff, Methyl, Methoxy, Chlor oder Brom ist.

3. Farbstoffe gemäss Anspruch 2, worin X Wasserstoff oder Methyl ist.

4. Farbstoffe gemäss einem der Ansprüche 1-3, worin Y Wasserstoff, Chlor, Methyl, Methoxy, Methoxyethyl oder Methoxyethoxy ist.

5. Farbstoffe gemäss Anspruch 4, worin Y Wasserstoff ist.

6. Farbstoffe gemäss einem der Ansprüche 1-5, worin R $C_1$-$C_4$-Alkyl ist, welches durch Hydroxy, $C_1$-$C_4$-Alkoxy oder Phenyl substituiert sein kann.

7. Farbstoffe gemäss Anspruch 6, worin R Methyl, Ethyl oder Benzyl ist.

8. Farbstoffe gemäss einem der Ansprüche 1-3, worin R und Y zusammen mit dem Stickstoffatom und den beiden sie verbindenden C-Atomen einen 6-Ring bilden, welcher unsubstituiert ist oder 1 bis 3 Methylgruppen trägt.

9. Farbstoffe gemäss einem der Ansprüche 1-8, worin B einen Alkylenrest darstellt, welcher unsubstituiert ist oder durch Hydroxy substituiert ist.

10. Farbstoffe gemäss Anspruch 9, worin B Ethylen oder 1,3-Propylen bedeutet.

11. Farbstoffe gemäss einem der Ansprüche 1-10, worin Z -O- oder

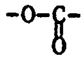

bedeutet.

12. Farbstoffe gemäss einem der Ansprüche 1-11, worin A ein Rest der Formeln

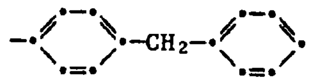

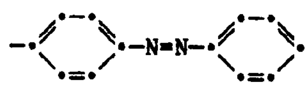

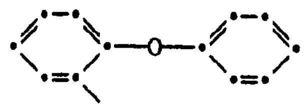

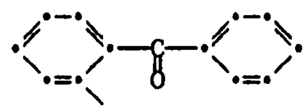

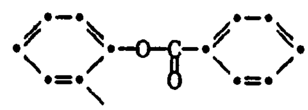

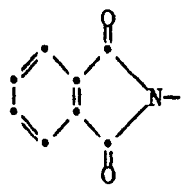

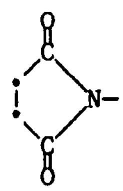

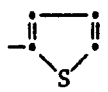

ist, wobei diese Reste durch $C_1$-$C_4$-Alkyl, $C_1$-$C_4$-Alkoxy, Halogen oder Nitro substituiert sein können.

13. Farbstoffe der Formel

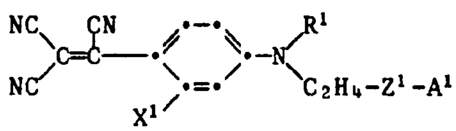

(2)

worin

$X^1$ Wasserstoff oder Methyl,

$R^1$ Methyl, Ethyl oder Benzyl,

$Z^1$ die direkte Bindung, -O-, -S- oder

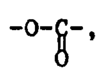

$A^1$ ein Rest der Formel

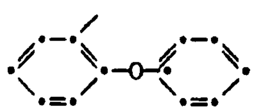

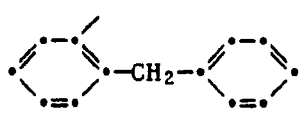

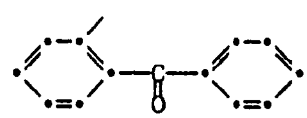

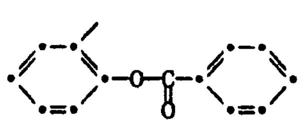

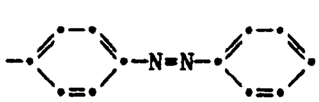

oder

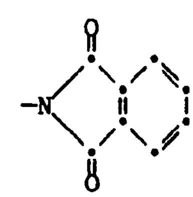

ist.

14. Verfahren zur Herstellung von Dispersionsfarbstoffen der Formel (1) gemäss Anspruch 1, dadurch gekennzeichnet, dass man eine Verbindung der Formel

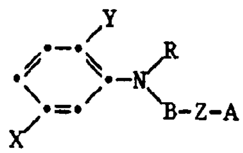

(3)

mit Tetracyanethylen umsetzt, oder indem man eine Verbindung der Formel

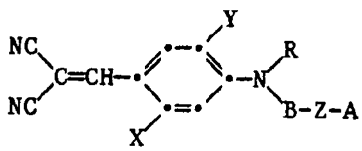

(4)

mit einem Cyanid und anschliessend mit einem Oxidationsmittel umsetzt.

15. Verwendung der Dispersionsfarbstoffe gemäss Anspruch 1 zum Färben oder Bedrucken von halbsynthetischem oder synthetischem hydrophobem Fasermaterial, insbesondere Textilmaterial.

16. Verwendung nach Anspruch 15 zum Färben oder Bedrucken von Textilmaterial aus Polyesterfasern.

17. Verfahren zum Färben oder Bedrucken von halbsynthetischem oder synthetischem hydrophobem Fasermaterial, insbesondere Textilmaterial, dadurch gekennzeichnet, dass man eine oder mehrere der in Anspruch 1 definierten Verbindungen auf das gesamte Material aufbringt oder diesem einverleibt.

18. Verfahren nach Anspruch 17, worin das hydrophobe Fasermaterial, vorzugsweise Textilmaterial, aus Polyesterfasern besteht.

19. Das gemäss Anspruch 17 oder 18 gefärbte oder bedruckte Material.

20. Farbstoffpräparate, enthaltend einen Farbstoff gemäss Anspruch 1 sowie bei Dispersionsfarbstoffen übliche Zusätze.

## Claims

1. A disperse dye of the formula

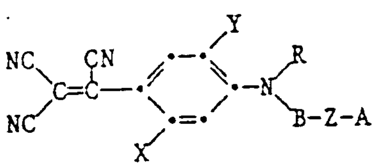

(1)

in which

X is hydrogen, $C_1$-$C_4$alkyl, $C_1$-$C_4$alkoxy or halogen,

Y is hydrogen, halogen, $C_1$-$C_4$alkyl, $C_1$-$C_4$alkoxy, $C_1$-$C_4$alkoxy-$C_1$-$C_4$alkyl or $C_1$-$C_4$alkoxy-$C_1$-$C_4$alkoxy,

R is hydrogen, $C_1$-$C_{12}$alkyl, $C_2$-$C_{12}$alkenyl or phenyl, or

Y and R, together with the nitrogen atom and the two C atoms linking them, form a 5- or 6-membered ring,

B is a straight-chain or branched $C_2$-$C_6$alkylene radical,

Z is a bridge member of the formula -O-, -S-, -NH-

$$-\underset{\underset{O}{\|}}{C}-NH-,\quad -O-\underset{\underset{O}{\|}}{C}-,\quad -NH-\underset{\underset{O}{\|}}{C}-$$

or a direct bond and

A is a radical of the formula

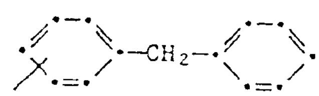

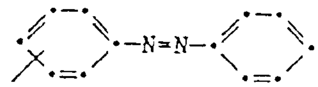

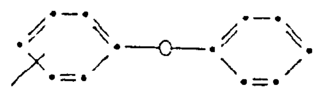

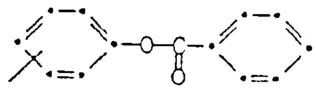

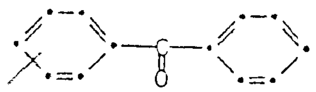

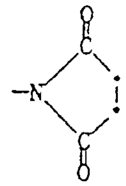

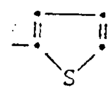

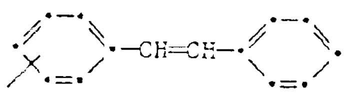

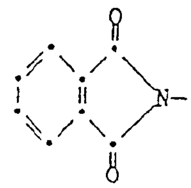

or

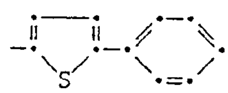

where these radicals can additionally be substituted by $C_1$-$C_4$alkyl, $C_1$-$C_4$alkoxy, halogen or nitro.

2. A dye according to claim 1, in which X is hydrogen, methyl, methoxy, chlorine or bromine.

3. A dye according to claim 2, in which X is hydrogen or methyl.

4. A dye according to any one of claims 1-3, in which Y is hydrogen, chlorine, methyl, methoxy, methoxyethyl or methoxyethoxy.

5. A dye according to claim 4, in which Y is hydrogen.

6. A dye according to any one of claims 1-5, in which R is $C_1$-$C_4$alkyl which can be substituted by hydroxyl, $C_1$-$C_4$alkoxy or phenyl.

7. A dye according to claim 6, in which R is methyl, ethyl or benzyl.

8. A dye according to any one of claims 1-3, in which R and Y together with the nitrogen atom and the two C atoms joining them form a 6-membered ring which is unsubstituted or carries 1 to 3 methyl groups.

9. A dye according to any one of claims 1-8, in which B is an alkylene radical which is unsubstituted or substituted by hydroxyl.

10. A dye according to claim 9, in which B is ethylene or 1,3-propylene.

11. A dye according to any one of claims 1-10, in which Z is -O- or

$$-O-\underset{\underset{O}{\|}}{C}-.$$

12. A dye according to any one of claims 1-11, in which A is a radical of the formulae

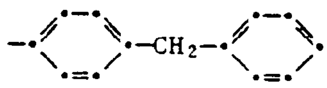

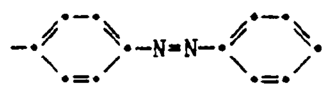

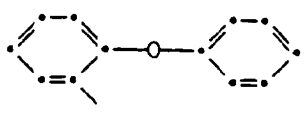

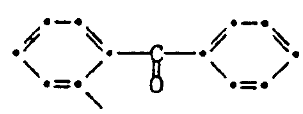

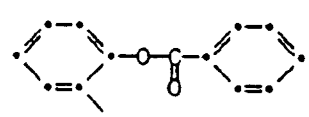

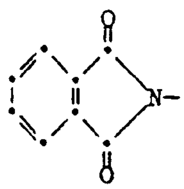

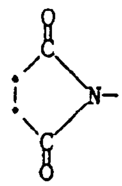

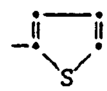

where these radicals can be substituted by $C_1$-$C_4$alkyl, $C_1$-$C_4$alkoxy, halogen or nitro.

13. A dye of the formula

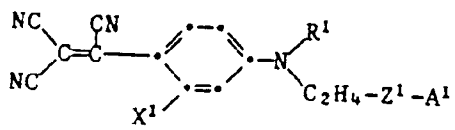

(2)

in which
$X^1$ is hydrogen or methyl, $R^1$ is methyl, ethyl or benzyl, $Z^1$ is a direct bond, -O-, -S- or

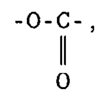

and $A^1$ is a radical of the formula

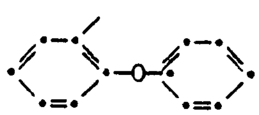

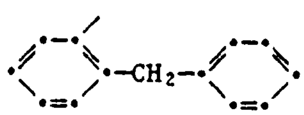

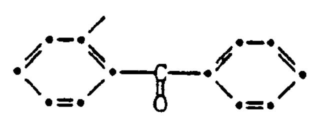

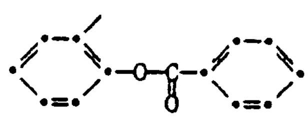

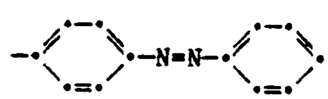

or

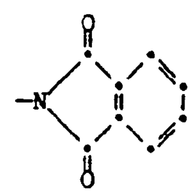

14. A process for preparing a disperse dye of the formula (1) according to claim 1, which comprises reacting a compound of the formula

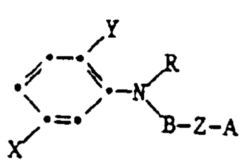

(3)

with tetracyanoethylene, or reacting a compound of the formula

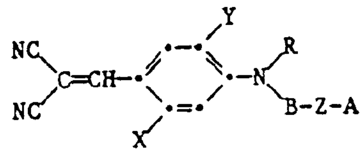

(4)

with a cyanide and then with an oxidizing agent.

15. Use of a disperse dye according to claim 1 for dyeing or printing semi-synthetic or synthetic hydrophobic fibre material, in particular textile material.

16. Use according to claim 15 for dyeing or printing textile material made of polyester fibres.

17. A process for dyeing or printing semi-synthetic or synthetic hydrophobic fibre material, in particular textile material, which comprises applying or incorporating one or more of the compounds defined in claim 1 to or in the entire material.

18. A process according to claim 17, wherein the hydrophobic fibre material, preferably textile material, consists of polyester fibres.

19. A material dyed or printed according to claim 17 or 18.

20. A dye preparation containing a dye according to claim 1 and also additives customary with disperse dyes.

## Revendications

1. Colorants dispersés de formule

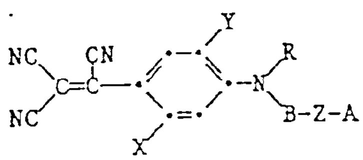

(1)

dans laquelle
X représente un atome d'hydrogène, un groupe alkyle en $C_{1-4}$, alcoxy en $C_{1-4}$, ou un atome d'halogène,
Y représente un atome d'hydrogène ou d'halogène, un groupe alkyle en $C_{1-4}$, alcoxy en $C_{1-4}$, alcoxy($C_{1-4}$)-alkyle($C_{1-4}$) ou alcoxy($C_{1-4}$)-alcoxy($C_{1-4}$),
R représente un atome d'hydrogène, un groupe alkyle en $C_{1-12}$, alcényle en $C_{2-12}$ ou phényle, ou bien
Y et R forment, ensemble avec l'atome d'azote et les deux atomes de carbone qui les relient, un cycle à 5 ou 6 chaînons, et
B représente un reste alkylène en $C_{2-6}$ linéaire ou ramifié,
Z représente un pont de formule -O-, -S-, -NH-, -C(=O)-NH-, -O-C(=O)-, NH-C(=O)-
ou une liaison directe, et
A représente un reste de formule

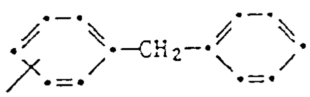

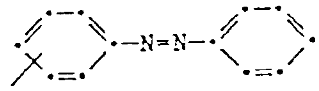

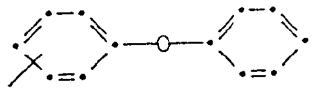

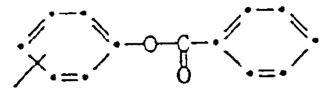

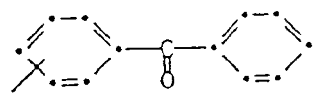

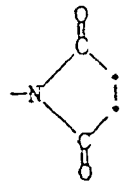

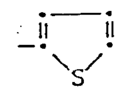

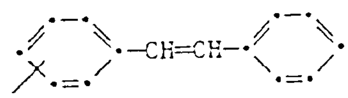

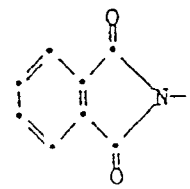

ou

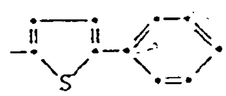

ces restes pouvant encore être substitués par des groupes alkyle en $C_{1-4}$, alcoxy en $C_{1-4}$, halogène ou nitro.

2. Colorants selon la revendication 1, dans lesquels X est hydrogène, méthyle, méthoxy, chloro ou bromo.

3. Colorants selon la revendication 2, dans lesquels X est hydrogène ou méthyle.

4. Colorants selon une des revendications 1 à 3, dans lesquels Y est hydrogène, chloro, méthyle, méthoxy, méthoxyéthyle ou méthoxyéthoxy.

5. Colorants selon la revendication 4, dans lesquels Y est hydrogène.

6. Colorants selon une des revendications 1 à 5, dans lesquels R représente un groupe alkyle en $C_{1-4}$, qui peut être substitué par hydroxy, alcoxy en $C_{1-4}$ ou phényle.

7. Colorants selon la revendication 6, dans lesquels R est méthyle, éthyle ou benzyle.

8. Colorants selon une des revendications 1 à 3, dans lesquels R et Y forment, ensemble avec l'atome d'azote et les deux atomes de carbone qui les relient, un cycle à 6 chaînons, non substitué ou porteur de 1 à 3 groupes méthyle.

9. Colorants selon une des revendications 1 à 8, dans lesquels B représente un groupe alkylène, non substitué ou substitué par hydroxy.

10. Colorants selon la revendication 9, dans lesquels B est éthylène ou 1,3-propylène.

11. Colorants selon une des revendications 1 à 10, dans lesquels Z est -O- ou -O-C(=O)-.

12. Colorants selon une des revendications 1 à 11, dans lesquels A représente un reste de formule.

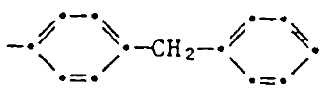
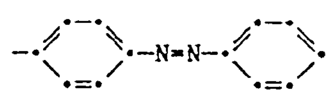

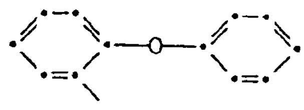
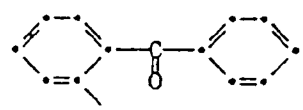
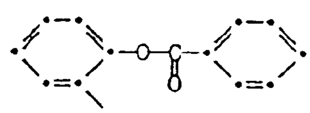

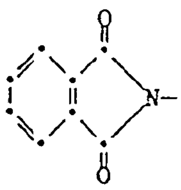
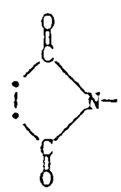
ou
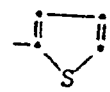

ces restes pouvant encore être substitués par des groupes alkyle en $C_{1-4}$, alcoxy en $C_{1-4}$, halogène ou nitro.

13. Colorants de formule

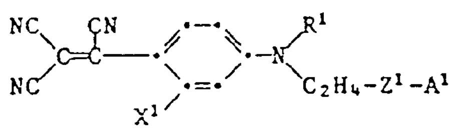
(2)

dans laquelle
$X^1$ est hydrogène ou méthyle,
$R^1$ est méthyle, éthyle ou benzyle,
$Z^1$ est la liaison directe, -O-, -S- ou -O-C(=O)-,
$A^1$ représente un reste de formule

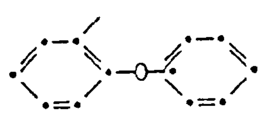
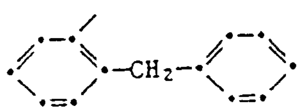
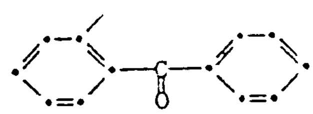

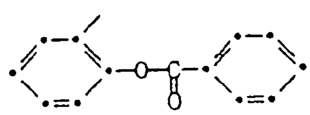
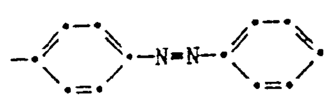
ou
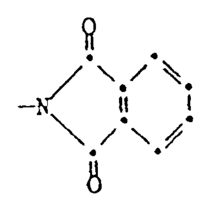

14. Procédé de préparation de colorants dispersés de formule (1) selon la revendication 1, caractérisé en ce que l'on fait réagir un composé de formule

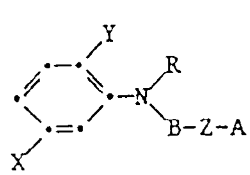
(3)

avec du tétracyanoéthylène, ou en ce qu'on fait réagir un composé de formule

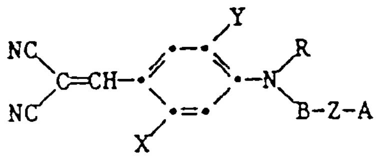

(4)

avec un cyanure et ensuite avec un oxydant.

15. Utilisation des colorants dispersés de la revendication 1, pour la teinture ou l'impression de matière fibreuse hydrophobe semi-synthétique ou synthétique, en particulier de matière textile.

16. Utilisation selon la revendication 15 pour la teinture ou l'impression de matière textile en fibres de polyester.

17. Procédé de teinture ou d'impression d'une matière fibreuse hydrophobe semi-synthétique ou synthétique, en particulier d'une matière textile, caractérisé en ce que l'on dépose un ou plusieurs des composés définis dans la revendication 1 sur l'ensemble de la matière ou bien qu'on incorpore ce ou ces composés à ladite matière.

18. Procédé selon la revendication 17, dans lequel la matière fibreuse hydrophobe, de préférence matière textile, est à base de fibres de polyester.

19. Matière teinte ou imprimée selon la revendication 17 ou 18.

20. Préparations de colorants, renfermant un colorant selon la revendication 1 et les additifs usuels pour colorants dispersés.